(19) Europäisches Patentamt
European Patent Office
Office européen des brevets

(11) **EP 4 249 312 A1**

(12) **EUROPEAN PATENT APPLICATION**
published in accordance with Art. 153(4) EPC

(43) Date of publication:
**27.09.2023 Bulletin 2023/39**

(21) Application number: **20961892.5**

(22) Date of filing: **18.11.2020**

(51) International Patent Classification (IPC):
**B60L 15/20** *(2006.01)*

(52) Cooperative Patent Classification (CPC):
**B60L 15/20**

(86) International application number:
**PCT/CN2020/129825**

(87) International publication number:
**WO 2022/104601 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **ZHEJIANG ZEEKR INTELLIGENT TECHNOLOGY CO., LTD.**
**Zhejiang 315899 (CN)**
• **Zhejiang Geely Holding Group Co., Ltd.**
**Hangzhou, Zhejiang 310051 (CN)**

(72) Inventors:
• **HU, Benbo**
**Hangzhou Bay New District Ningbo, Zhejiang 315336 (CN)**
• **ZHANG, Dang**
**Hangzhou Bay New District Ningbo, Zhejiang 315336 (CN)**

(74) Representative: **Zaboliene, Reda**
**Metida**
**Business center Vertas**
**Gyneju str. 16**
**01109 Vilnius (LT)**

(54) **TORQUE DISTRIBUTION METHOD FOR FOUR-WHEEL DRIVE OF ELECTRIC VEHICLE, AND SYSTEM AND VEHICLE**

(57) A torque distribution method for four-wheel drive of an electric vehicle, and a system and a vehicle. The method comprises: acquiring the total demanded torque of a whole vehicle; determining a demand state of the whole vehicle according to traveling parameter information, and outputting a front and rear axle torque distribution coefficient corresponding to the demand state of the whole vehicle, wherein the demand state comprises the highest driving efficiency; and outputting a front and rear axle torque distribution coefficient corresponding to the demand state of the whole vehicle comprises: obtaining a first front and rear axle torque distribution coefficient according to a mathematical model of front and rear axle driving force when front and rear wheels slip simultaneously, and according to the total demanded torque of the whole vehicle; obtaining the front and rear axle torque distribution coefficient according to the first front and rear axle torque distribution coefficient; and obtaining target torque of front and rear driving system according to the front and rear axle torque distribution coefficient and the total demanded torque of the whole vehicle. By means of the torque distribution method for four-wheel drive of the electric vehicle, the best road adhesion performance and the highest driving efficiency of a vehicle can be realized.

FIG.1

**Description**

**TECHNICAL FIELD**

The present application relates to the field of vehicle power distribution, and in particular to a torque distribution method for four-wheel drive of an electric vehicle, and a system and a vehicle applying the same.

**BACKGROUND**

As global environmental issues and energy crises continue to exacerbate, environmental protection and energy conservation has become a hot topic worldwide. Due to its energy-saving, high-efficiency and zero-emission advantages, the development and promotion of pure electric vehicles have been gradually initiated in many countries.

On the basis of energy conservation and environmental protection, the four-wheel drive system can provide better power performance and handling performance. Consequently, more electric vehicles adopt the four-wheel drive power system structure. Electric four-wheel drive vehicles usually have independent front and rear axle electric drive systems, and the front and rear axle electric drive systems can allocate the driver's total demand torque for the whole vehicle within the range of (0-1). Unlike two-wheel drive electric vehicles, electric four-wheel drive vehicles require torque distribution in both the front and rear axles, requiring effective torque distribution control strategies to fully leverage the advantages of the four-wheel drive system, resulting in relatively high complexity of control.

**TECHNICAL PROBLEM**

Due to the need to account for different terrain and driving conditions for front and rear axle torque distribution in four-wheel drive vehicles, the torque distribution control technology for the front and rear axles of four-wheel drive vehicles remains a difficulty and a focus of vehicle control technology. Different terrains, different road adhesion coefficients, different vehicle motion states, and different driver driving operations all require different front and rear axle torque distribution for the vehicle. Different front and rear axle torque distributions affect the vehicle's driving efficiency, stability, and handling performance, and the front and rear axle torque distribution is also limited by the frontal and rear axle electric drive systems' own limitations. Therefore, how to reasonably allocate the torque distribution ratio of the front and rear axles based on the actual driving conditions of the electric four-wheel drive vehicle to achieve the highest driving efficiency is a technical problem that urgently needs to be addressed by technicians in this field.

**TECHNOLOGY SOLUTION**

The purpose of this application is to provide a torque distribution method for four-wheel drive of an electric vehicle that achieves optimal road adherence and driving efficiency through the distribution of torque to the front and rear axles. The application also involves a system and vehicle that apply this method.

In order to solve the above technical problems, the present application provides a torque distribution method for four-wheel drive of the electric vehicle. As an embodiment, the torque distribution method for four-wheel drive of the electric vehicle includes:

acquiring a total vehicle demand torque of a whole vehicle;
determining a demand state of the whole vehicle according to traveling parameter information, and outputting a front and rear axle torque distribution coefficient corresponding to the demand state of the whole vehicle;
wherein, the demand state includes the highest driving efficiency, and outputting the front and rear axle torque distribution coefficient corresponding to the demand state of the whole vehicle includes: obtaining a first front and rear axle torque distribution coefficient according to a mathematical model of front and rear axle driving force when front and rear wheels slip simultaneously, and according to the total demanded torque of the whole vehicle; obtaining the front and rear axle torque distribution coefficient according to the first front and rear axle torque distribution coefficient;
obtaining target torque of front and rear driving system according to the front and rear axle torque distribution coefficient and the total demanded torque of the whole vehicle.

As one of the embodiments, the step of acquiring the total vehicle demand torque of the whole vehicle includes:

acquiring vehicle speed and opening degree of the accelerator pedal;
calculating the total vehicle demand torque of the whole vehicle according to the vehicle speed and the opening degree of the accelerator pedal by looking up a table.

As one of the embodiments, the step of acquiring the total vehicle demand torque of the whole vehicle includes:

acquiring driving mode, vehicle speed and opening degree of the accelerator pedal;
calculating the total vehicle demand torque of the whole vehicle according to the driving mode, the vehicle speed and the opening degree of the accelerator pedal by looking up a table.

As one of the embodiments, the method for obtaining the mathematical model of front and rear axle driving force when front and rear wheels slip simultaneously includes the steps:

acquiring a first formula group by taking the torque of the ground point of the front and rear axle tires;
acquiring a second formula group according to the sum of the driving forces of the front and rear axles is equal to the total pavement adhesion, and the driving forces of the front and rear axles are equal to their respective pavement adhesion;
acquiring a third formula group according to the first formula group and the second formula group, wherein, the third formula group representing the front and rear axis driving force;
obtaining the mathematical model of front and rear axle driving force when front and rear wheels slip simultaneously by eliminating the road adhesion coefficient of the third formula group.

As an implementation manner, the first formula group is:

$$FZ1L=(G*b-m*du/dt*Hg)$$

$$FZ2L=(G*a+m*du/dt*Hg)$$

The second formula group is:

$$Ff+Fr=\varphi*G$$

$$Ff=\varphi*FZ1$$

$$Fr=\varphi*FZ2$$

The third formula group is:

$$Ff=\varphi(Wf*g-\varphi*m*g*Hg/L)$$

$$Fr=\varphi(Wr*g+\varphi*m*g*Hg/L)$$

the mathematical model of front and rear axle driving force when front and rear wheels slip simultaneously is:

$$F_r = \frac{1}{2}\left[\frac{G*b}{Hg}\sqrt{b^2-\frac{4*Hg*L}{G}F_f}+\frac{G*b}{Hg}-2F_f\right]$$

Among them, m=Wf+Wr, L=a+b, G=m*g, du/dt=$\varphi$*g, m is the full load mass, Wf is the mass of the front axle, Wr is the mass of the front axle, FZ1 is the ground normal force of the front wheel, and FZ2 is ground normal force of the rear wheel, Hg is the height of the center of mass, L is the wheelbase, a is the distance from the center of mass to the front axle, b is the distance from the center of mass to the rear axle, r is the tire rolling radius, $\varphi$ is the road adhesion coefficient, and G is the vehicle gravity, du/dt is the vehicle acceleration, Ff is the front axle driving force, Fr is the rear axle driving force, Mf is the front axle torque, and Mr is the rear axle torque.

As one of the embodiments, after the step of obtaining the target torque of the front and rear drive system according to the front and rear axle torque distribution coefficient and the total demand torque of the whole vehicle, further includes:

> obtaining the maximum torque parameters of the front and rear drive system;
> comparing the target torque with the maximum torque parameter, and taking the smaller value as the final target torque of the front and rear drive system;
> sending the final target torque to the front and rear drive system.

As one embodiment, wherein the demand state further includes vehicle steering instability control, and obtaining the front and rear axle torque distribution coefficient according to the first front and rear axle torque distribution coefficient includes:

> obtaining steering state of the vehicle through vehicle dynamics analysis, and then obtaining the second front and rear axle torque distribution coefficient according to the relationship between the steering state of the vehicle and the preset steering distribution coefficient;
> obtaining the front and rear axle torque distribution coefficient by adding the first front and rear axle torque distribution coefficient and the second front and rear axle torque distribution coefficient.

As one embodiment, wherein the vehicle dynamics analysis is to simplify the vehicle into a two-degree-of-freedom model, and analyze the force relationship between the lateral and transverse motion of the vehicle when turning, so as to establishing the force equation by the sum of the resultant force of the vehicle's external force perpendicular to the vehicle's driving direction and the torque around the center of mass, to obtain the driver's expected yaw speed, and then obtaining the steering state of the vehicle through the difference between the expected yaw speed and the actual yaw speed, and acting the steering state of the vehicle as the input parameter of the PID control algorithm, then obtaining the second front and rear axles torque distribution coefficient according to the relationship between the input parameter and the preset steering distribution coefficient; wherein, the force equation is:

$$MV\dot{\beta} = -(2D_1 + 2D_2)\beta - [MV + (2D_1a_1 - 2D_2a_2)/V]\dot{\omega} + 2D_1\delta$$

$$I_{ZZ}\ddot{\omega} = -[(2D_1a_1^2 + 2D_2a_2^2)/V]\dot{\omega} - (2D_1a_1 - 2D_2a_2)\beta + 2D_1a_1\delta$$

Among them, V is the speed of the vehicle, M is the mass of the vehicle, Izz is the moment of inertia around the z-axis, D1 and D2 are the cornering stiffnesses of the front and rear axle tires, respectively, a1 and a2 are the distance from the center of mass to the front and rear axles, and $\beta$ is the cornering angle, $\dot{\omega}$ is the yaw speed, $\delta$ is the tire angle, that is, the product of the steering wheel angle and the angular transmission ratio.

As one embodiment, wherein the demand state further includes a gradeability, and obtaining the front and rear axle torque distribution coefficient according to the first front and rear axle torque distribution coefficient includes:

obtaining the third front and rear axle torque distribution coefficient by comparing slope of the ramp with the preset calibration scale of the distribution coefficient based on the slope of the ramp;

obtaining the front and rear axle torque distribution coefficient according to the product of the third front and rear axle torque distribution coefficient and the first front and rear axle torque distribution coefficient.

As one embodiment, obtaining the front and rear axle torque distribution coefficient according to the product of the third front and rear axle torque distribution coefficient and the first front and rear axle torque distribution coefficient includes the following steps:

> obtaining the fourth front and rear axle torque distribution coefficient based on the axle slip state parameter and the preset distribution coefficient relationship based on the axle slip state parameter;
> obtain the front and rear axle torque distribution coefficient according to multiplying the third front and rear axle torque distribution coefficient by the first front and rear axle torque distribution coefficient, and adding the multiplied result to the fourth front and rear axle torque distribution coefficient.

As one embodiment, the demand state further includes demand maneuverability, and obtaining the front and rear axle torque distribution coefficient according to the first front and rear axle torque distribution coefficient includes:

obtaining a fifth front and rear axle torque distribution coefficient by comparing steering wheel angle with the preset calibration scale of the distribution coefficient based on the steering wheel angle;
obtaining the front and rear axle torque distribution coefficient according to the product of the fifth front and rear axle torque distribution coefficient and the first front and rear axle torque distribution coefficient.

As one of the embodiments, the step of obtaining the front and rear axle torque distribution coefficient according to the product of the fifth front and rear axle torque distribution coefficient and the first front and rear axle torque distribution coefficient includes:

obtaining a sixth front and rear axle torque distribution coefficient by comparing the vehicle speed with a preset calibration scale of distribution coefficient base on the vehicle speed;
obtaining the front and rear axle torque distribution coefficient by multiplying the fifth front and rear axle torque distribution coefficient, the sixth front and rear axle torque distribution coefficient, and the first front and rear axle torque distribution coefficient.

As one embodiment, the demand state further includes vehicle steering instability control, gradeability and demand maneuverability, and the step of obtaining the front and rear axle torque distribution coefficient according to the first front and rear axle torque distribution coefficient includes:

obtaining the steering state of the vehicle through the vehicle dynamics analysis, and then obtaining the second front and rear axle torque distribution coefficient according to the relationship between the steering state of the vehicle and the preset steering distribution coefficient, obtaining the third front and rear axle torque distribution coefficient by comparing slope of the ramp with the preset calibration scale of the distribution coefficient based on the slope of the ramp, and obtaining the fourth front and rear axle torque distribution coefficient based on the axle slip state parameter and the preset distribution coefficient relationship based on the axle slip state parameter, obtaining a fifth front and rear axle torque distribution coefficient by comparing steering wheel angle with the preset calibration scale of the distribution coefficient based on the steering wheel angle, and obtaining a sixth front and rear axle torque distribution coefficient by comparing the vehicle speed with a preset calibration scale of distribution coefficient base on the vehicle speed;
obtain the front and rear axle torque distribution coefficient according to multiplying the first front and rear axle torque distribution coefficient, the third front and rear axle torque distribution coefficient, the fifth front and rear axle torque distribution coefficient, and the sixth front and rear axle torque distribution coefficient, and adding the multiplied result to the second front and rear axle torque distribution coefficient and the fourth front and rear axle torque distribution coefficient.

In order to solve the above technical problems, the present application also provides a torque distribution system for four-wheel drive of an electric vehicle. As an embodiment, the torque distribution system for four-wheel drive of the electric vehicle includes:
a memory, the memory stores at least one program instruction;
A processor, where the processor loads and executes the at least one program instruction to implement the torque distribution method for four-wheel drive of an electric vehicle according to any one of the foregoing embodiments.
In order to solve the above technical problem, the present application further provides a vehicle, as an embodiment, the vehicle includes the four-wheel drive torque distribution system for an electric vehicle described in the above embodiment.

**BENEFICIAL EFFECT**

The torque distribution method for four-wheel drive of an electric vehicle provided by the present application, as well as a system and a vehicle applying the torque distribution method for four-wheel drive of an electric vehicle, by establishing a mathematical model of front and rear axle driving torques when the front and rear wheels of the vehicle slip simultaneously, according to the mathematical model, it is possible to obtain the ideal front and rear axle driving force distribution curves of different road adhesion coefficients. According to the ideal front and rear axle drive force distribution curve, the front and rear axle torque distribution coefficient under different torque requirements is calibrated, so as to obtain the target torque of the front and rear drive system with the best road grip performance and driving efficiency according to the real-time total torque demand and corresponding front and rear axle torque distribution coefficient during vehicle driving.

## BRIEF DESCRIPTION OF THE DRAWINGS

FIG. 1 is a schematic flowchart of an embodiment of a torque distribution method for four-wheel drive of an electric vehicle according to the present application.

FIG. 2 is a schematic diagram of a vehicle driving force analysis when the mathematical model of the application is constructed.

FIG 3 is a schematic diagram of the ideal front and rear axle driving force distribution curve obtained by the application through a mathematical model.

FIG. 4 is a logical structural block diagram of an embodiment of a torque distribution method for four-wheel drive of an electric vehicle according to the present application.

FIG. 5 is a schematic structural diagram of an embodiment of four-wheel drive of an electric vehicle torque distribution system according to the present application.

## DETAILED DESCRIPTION OF PREFERRED EMBODIMENTS

The embodiments of the present application are described below by specific examples, and those skilled in the art can easily understand other advantages and effects of the present application from the contents disclosed in this specification.

In the following description, reference is made to the accompanying drawings, which describe several embodiments of the present application. It is to be understood that other embodiments may be utilized and mechanical, structural, electrical, as well as operational changes may be made without departing from the spirit and scope of the present application. The following detailed description should not be considered limiting, and the scope of embodiments of the present application is limited only by the claims of the issued patent. The terminology used herein is for the purpose of describing particular embodiments only and is not intended to limit the application. Although in some instances the terms first, second, etc. are used herein to describe various elements, these elements should not be limited by these terms. These terms are only used to distinguish one element from another.

Also, as used herein, the singular forms "a," "an," and "the" are intended to include the plural forms as well, unless the context dictates otherwise. It should be further understood that the terms "comprising", "comprising" indicate the presence of stated features, steps, operations, elements, components, items, kinds, and/or groups, but do not exclude one or more other features, steps, operations, The existence, appearance or addition of elements, assemblies, items, categories, and/or groups. The terms "or" and "and/or" as used herein are to be construed to be inclusive or to mean any one or any combination. Thus, "A, B or C" or "A, B and/or C" means "any of the following: A; B; C; A and B; A and C; B and C; A, B and C". Exceptions to this definition arise only when combinations of elements, functions, steps, or operations are inherently mutually exclusive in some way.

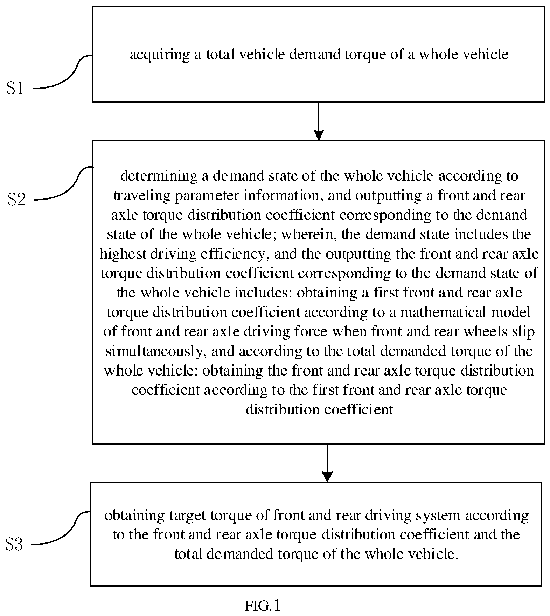

Please refer to FIG. 1. FIG. 1 is a schematic flowchart of an embodiment of a torque distribution method for four-wheel drive of an electric vehicle according to the present application.

It should be noted that the torque distribution method for four-wheel drive of an electric vehicle in this embodiment may include, but is not limited to, the following steps:

Step S1: acquiring a total vehicle demand torque of a whole vehicle.

Specifically, the total demand torque of the whole vehicle represents the torque required by the whole vehicle under different driving states. In general, it is determined by the opening degree of the accelerator pedal, that is, the current total vehicle demand torque is calculated by looking up a table according to the opening degree of the accelerator pedal.

In one embodiment, step S1: acquiring a total vehicle demand torque of a whole vehicle, includes:

acquiring vehicle speed and opening degree of the accelerator pedal;

calculating the total vehicle demand torque of the whole vehicle according to the vehicle speed and a table of opening degree of the accelerator pedal.

It is worth mentioning that vehicles of different levels have different vehicle performance adjustments. For example, for vehicles with driving mode adjustment, different driving modes such as sports and comfort can be adjusted. The torque required for the whole vehicle at different opening degree of the accelerator pedal is different, that is, different driving modes have different tables of opening degree of the accelerator pedal. Therefore, in one embodiment, step S1: acquiring a total vehicle demand torque of a whole vehicle includes:

acquiring driving mode, vehicle speed and opening degree of the accelerator pedal;
calculating the total vehicle demand torque of the whole vehicle according to the driving mode, the vehicle speed and a table of opening degree of the accelerator pedal.

Step S2: determining a demand state of the whole vehicle according to traveling parameter information, and outputting a front and rear axle torque distribution coefficient corresponding to the demand state of the whole vehicle; wherein, the demand state includes the highest driving efficiency, and the outputting the front and rear axle torque distribution coefficient corresponding to the demand state of the whole vehicle includes: obtaining a first front and rear axle torque distribution coefficient P1 according to a mathematical model of front and rear axle driving force when front and rear wheels slip simultaneously, and according to the total demanded torque of the whole vehicle; obtaining the front and rear axle torque distribution coefficient P according to the first front and rear axle torque distribution coefficient P1.

Specifically, the demand state of the whole vehicle refers to the different functional requirements of the vehicle in different motion scenarios, and the different functional requirements can be transformed into different front and rear axle torque distributions. For example, in the entire driving process of the vehicle, the most basic functional requirement is that the driving efficiency of the vehicle is the highest. On the basis of the highest driving efficiency, it may also be necessary to realize the instability control when the vehicle steering is unstable, and it may also be necessary to realize the demand state of vehicles under different special circumstances such as the stability of the vehicle slope when the vehicle is going uphill, that is, the adjustment of the torque distribution coefficient of the front and rear axles corresponding to the special situation when the vehicle is running. Among them, the traveling parameter information of the vehicle corresponding to different demand states requires different traveling parameter information, which may include steering wheel angle, four-wheel speed, vehicle speed, yaw speed, lateral acceleration, longitudinal acceleration, driving mode, and slope of the ramp.

Among them, as the most basic vehicle demand state, the highest driving efficiency of the vehicle is particularly important. When the front and rear wheels of the vehicle slip at the same time, the road surface adhesion performance of the vehicle tires is the best, and the driving efficiency is the highest. Therefore, by establishing a mathematical model of the driving torque of the front and rear axles when the front and rear wheels of the vehicle slip at the same time, according to the mathematical model, the ideal distribution curve of the front and rear axle driving force on the road surface with different road adhesion coefficients can be obtained. The front and rear axle torque distribution coefficient under different required torques are calibrated, and the first front and rear axle torque distribution coefficient P1 corresponding to the highest driving efficiency can be obtained from the calibration chart.

It is worth mentioning that the front and rear axle torque distribution coefficient mentioned in this article represents the proportion of the front axle torque to the total demand torque, or the proportion of the rear axle torque to the total demand torque. When one of them is determined, the other parameter can be determined.

In one embodiment, in step S2, the method for obtaining the mathematical model of the driving force of the front and rear axles when the front and rear wheels slip simultaneously includes the steps:

acquiring a first formula group by taking the torque of the ground point of the front and rear axle tires;
acquiring a second formula group according to the sum of the driving forces of the front and rear axles is equal to the total pavement adhesion, and the driving forces of the front and rear axles are equal to their respective pavement adhesion;
acquiring a third formula group according to the first formula group and the second formula group, wherein, the third formula group representing the front and rear axis driving force;
obtaining the mathematical model of front and rear axle driving force when front and rear wheels slip simultaneously by eliminating the road adhesion coefficient of the third formula group.

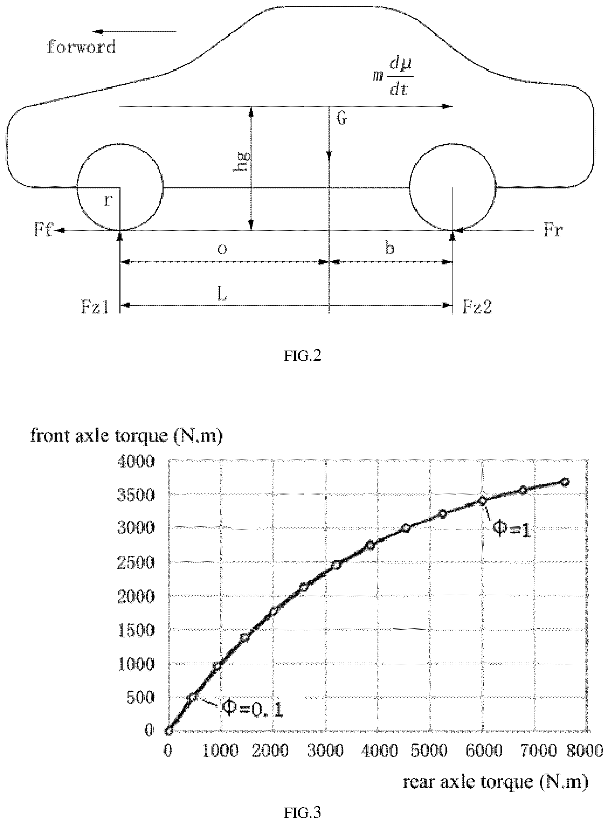

Specifically, please refer to FIG. 2, which is a schematic diagram of a vehicle driving force analysis when the mathematical model of the present application is constructed. As shown in FIG 2, the first formula group is obtained by taking the torque of the ground point of the front and rear axle tires of the vehicle:

$$F_{Z1}L=(G*b-m*du/dt*Hg)$$

$$F_{Z2}L=(G*a+m*du/dt*Hg)$$

When the front and rear wheels are slipping at the same time, the vehicle's adhesion performance is best utilized. On the road surface of any adhesion coefficient, the condition when the front and rear wheels are slipping at the same time is that the sum of the front and rear axle driving forces is equal to the adhesion force, and the front and rear axle driving forces are respectively equal to their respective adhesion forces , so the second formula group is:

$$F_f+F_r=\varphi*G$$

$$F_f=\varphi*F_{Z1}$$

$$F_r=\varphi*F_{Z2}$$

According to the first formula group and the second formula group, the third formula group representing the driving force of the front and rear axles is obtained:

$$F_f=\varphi(W_f*g-\varphi*m*g*Hg/L)$$

$$F_r=\varphi(W_r*g+\varphi*m*g*Hg/L)$$

Finally, on the basis of the third formula group, the road adhesion coefficient φ is eliminated to obtain the mathematical model based on the front and rear axle driving force distribution when the front and rear wheels are slipping at the same time:

$$F_r = \frac{1}{2}\left[\frac{G*b}{Hg}\sqrt{b^2-\frac{4*Hg*L}{G}F_f}+\frac{G*b}{Hg}-2F_f\right]$$

Among them, m=$W_f$+$W_r$, L=a+b, G=m*g, du/dt=φ*g, m is the mass of full load, $W_f$ is the mass of the front axle, $W_r$ is the mass of the front axle, $F_{Z1}$ is the ground normal force of the front wheel, and $F_{Z2}$ is the rear axle Wheel ground normal force, Hg is the height of the center of mass, L is the wheelbase, a is the distance from the center of mass to the front axle, b is the distance from the center of mass to the rear axle, r is the tire rolling radius, is the road adhesion coefficient, and G is the Vehicle gravity, du/dt is the vehicle acceleration, Ff is the front axle driving force, Fr is the rear axle driving force, $M_f$ is the front axle torque, and $M_r$ is the rear axle torque.

According to the above analysis, the ideal driving force distribution curve for roads with different adhesion coefficients, that is, the ideal front and rear axle torque distribution curve can be obtained. Please refer to FIG. 3, which is a schematic diagram of an ideal front and rear axle driving force distribution curve obtained by a mathematical model of the present application. It can be seen from FIG. 3 that when the total demand torque of the whole vehicle is determined, the corresponding torques of the front and rear axles are also determined, that is to say, the torque distribution coefficient P1 of the first front and rear axles is determined. The distribution coefficient P1 is obtained by looking up the table of the total demand torque of the whole vehicle, and the table is obtained through the above analysis, that is, the final application of the mathematical model. For example, in FIG. 3, when the road adhesion coefficient φ is 0.1, the corresponding rear axle torque is 400N.m, and the front axle torque is 500N.m, so the total demand torque is 900N.m. At this time, the first front and rear axle torque distribution coefficient P1 is the ratio of the front axle torque or the rear axle torque to the total torque.

In one embodiment, in step S2, the demand state further includes vehicle steering instability control, and obtaining the front and rear axle torque distribution coefficient according to the first front and rear axle torque distribution coefficient P1 includes:

obtaining steering state of the vehicle through vehicle dynamics analysis, and then obtain the second front and rear axle torque distribution coefficient P2 according to the relationship between the steering state of the vehicle and the preset steering distribution coefficient;
obtaining the front and rear axle torque distribution coefficient P by adding the first front and rear axle torque distribution coefficient P1 and the second front and rear axle torque distribution coefficient P2.

Specifically, when the vehicle is turning, the torque distribution of the front and rear axles is particularly important. It can be understood that when the vehicle is in a state of excessive steering, the lateral force load on the rear tires is relatively large. At this time, if the driving torque distribution control is applied to the rear wheels, increasing the torque will easily lead to the deterioration of the vehicle's excessive steering state, which is not conducive to vehicle stability control. When the vehicle is in a neutral or understeer state, by controlling the torque distribution to the rear wheels and increasing the torque, it is beneficial to improve the steering response of the vehicle and weaken the understeer characteristics. Therefore, through the vehicle dynamics analysis, the steering state of the vehicle is judged, and then the torque distribution coefficient of the front and rear axles under different steering states is obtained according to the relationship between different steering states and the preset steering distribution coefficient, that is, the quantified steering state is used as the input parameter. Acquire the second front and rear axle torque distribution coefficient obtained according to the preset steering distribution coefficient relationship. The preset steering distribution coefficient relationship may be a calibration table or a calculation formula, which is not limited here.

In one embodiment, the vehicle dynamics analysis is to simplify the vehicle into a two-degree-of-freedom model, and analyze the force relationship between the lateral and transverse motion of the vehicle when turning, so as to establishing the force equation by the sum of the resultant force of the vehicle's external force perpendicular to the vehicle's driving direction and the torque around the center of mass, to obtain the driver's expected yaw speed, and then obtaining the steering state of the vehicle through the difference between the expected yaw speed and the actual yaw speed, and acting the steering state of the vehicle as the input parameter of the PID control algorithm, then obtaining the second front and rear axles torque distribution coefficient according to the relationship between the input parameter and the preset steering distribution coefficient; wherein, the force equation is:

$$MV\dot{\beta} = -(2D_1 + 2D_2)\beta - [MV + (2D_1 a_1 - 2D_2 a_2)/V]\dot{\omega} + 2D_1\delta$$

$$I_{ZZ}\ddot{\omega} = -[(2D_1 a_1^2 + 2D_2 a_2^2)/V]\dot{\omega} - (2D_1 a_1 - 2D_2 a_2)\beta + 2D_1 a_1\delta$$

Among them, V is the speed of the vehicle, M is the mass of the vehicle, Izz is the moment of inertia around the z-axis, D1 and D2 are the cornering stiffnesses of the front and rear axle tires, respectively, a1 and a2 are the distance from the center of mass to the front and rear axles, and $\beta$ is the cornering angle, $\omega$ is the yaw speed, $\delta$ is the tire angle, that is, the product of the steering wheel angle and the angular transmission ratio.

Specifically, according to vehicle dynamics analysis, the vehicle is simplified into a two-degree-of-freedom model. Based on the equations of motion obtained from this model, when the driver inputs a steering wheel angle, the expected yaw speed can be calculated. Then, this expected yaw speed is compared with the actual yaw speed detected by the yaw rate sensor installed on the vehicle. If the actual yaw speed is greater than the expected yaw speed, the vehicle is considered to be over-steering, and vice versa. In terms of quantitative calculations, the difference between the expected yaw speed and the actual yaw speed is used as the input parameter of the closed-loop PID (proportional, integral, derivative) control algorithm. Based on the preset steering allocation coefficient relationship, the second axle torque distribution coefficient P2 is determined.

In one embodiment, the demand state further includes gradeability, and obtaining the front and rear axle torque distribution coefficient according to the first front and rear axle torque distribution coefficient P1 includes:

obtaining the third front and rear axle torque distribution coefficient P3 by comparing slope of the ramp with the preset calibration scale of the distribution coefficient based on the slope of the ramp;

The front and rear axle torque distribution coefficient P is obtained according to the product of the third front and rear axle torque distribution coefficient P3 and the first front and rear axle torque distribution coefficient P1.

Specifically, the demand state is gradeability, which may include torque distribution adjustment for front and rear axles when driving on a slope. Of course, according to stability requirements, torque adjustment for front and rear axles in other situations may also be added. In this embodiment, the slope of the ramp is used as a variable. Correspondingly, a look-up table with the slope of the ramp as an input parameter is preset. The corresponding slope of the look-up table has a corresponding distribution coefficient, and the distribution coefficient is used as the third front and rear. The axle torque distribution coefficient P3, and then the front and rear axle torque distribution coefficient P is obtained according to the product of the third front and rear axle torque distribution coefficient P3 and the first front and rear axle torque distribution coefficient P1.

In one embodiment, obtaining the front and rear axle torque distribution coefficient P according to the product of the third front and rear axle torque distribution coefficient P3 and the first front and rear axle torque distribution coefficient P1 includes:

obtaining the fourth front and rear axle torque distribution coefficient P4 based on the axle slip state parameter and the preset distribution coefficient relationship based on the axle slip state parameter;

obtain the front and rear axle torque distribution coefficient P according to multiplying the third front and rear axle torque distribution coefficient P3 by the first front and rear axle torque distribution coefficient P1, and adding the multiplied result to the fourth front and rear axle torque distribution coefficient P4.

Specifically, the preset distribution coefficient relationship based on the axle slip state parameter may be a corresponding calibration scale or a corresponding calculation formula.

In one embodiment, the demand state further includes demand maneuverability, and obtaining the front and rear axle torque distribution coefficient P according to the first front and rear axle torque distribution coefficient P1 includes:

obtaining a fifth front and rear axle torque distribution coefficient P5 by comparing the steering wheel angle with preset calibration scale of the distribution coefficient based on the steering wheel angle;

obtaining the front and rear axle torque distribution coefficient P according to the product of the fifth front and rear axle torque distribution coefficient P5 and the first front and rear axle torque distribution coefficient P1.

Specifically, similar to the aforementioned stability, in this embodiment, the torque distribution of the front and rear axles is revised according to the steering wheel angle, so as to achieve rapid and precise control of vehicle handling.

In one embodiment, the front and rear axle torque distribution coefficient P obtained according to the product of the fifth front and rear axle torque distribution coefficient P5 and the first front and rear axle torque distribution coefficient P1 includes:

obtaining a sixth front and rear axle torque distribution coefficient P6 by comparing the vehicle speed with a preset calibration scale of distribution coefficient base on the vehicle speed;

obtaining the front and rear axle torque distribution coefficient P by multiplying the fifth front and rear axle torque distribution coefficient P5, the sixth front and rear axle torque distribution coefficient P6, and the first front and rear axle torque distribution coefficient P1.

In one embodiment, the demand state further includes vehicle steering instability control, gradeability and demand maneuverability, and obtaining the front and rear axle torque distribution coefficient P according to the first front and rear axle torque distribution coefficient P1 includes:

obtaining the steering state of the vehicle through vehicle dynamics analysis, and then obtaining the second front and rear axle torque distribution coefficient P2 according to the relationship between the steering state of the vehicle and the preset steering distribution coefficient, obtaining the third front and rear axle torque distribution coefficient P3 by comparing slope of the ramp with the preset calibration scale of the distribution coefficient based on the slope of the ramp, and obtaining the fourth front and rear axle torque distribution coefficient P4 based on the axle slip state parameter and the preset distribution coefficient relationship based on the axle slip state parameter, obtaining the fifth front and rear axle torque distribution coefficient P5 by comparing steering wheel angle with the preset calibration scale of the distribution coefficient based on the steering wheel angle, and obtaining the sixth front and rear axle torque distribution coefficient P6 by comparing the vehicle speed with a preset calibration scale of distribution coefficient base on the vehicle speed;

obtain the front and rear axle torque distribution coefficient P according to multiplying the first front and rear axle torque distribution coefficient P1, the third front and rear axle torque distribution coefficient P3, the fifth front and rear axle torque distribution coefficient P5, and the sixth front and rear axle torque distribution coefficient P6, and adding the multiplied result to the second front and rear axle torque distribution coefficient P2 and the fourth front and rear axle torque distribution coefficient P4.

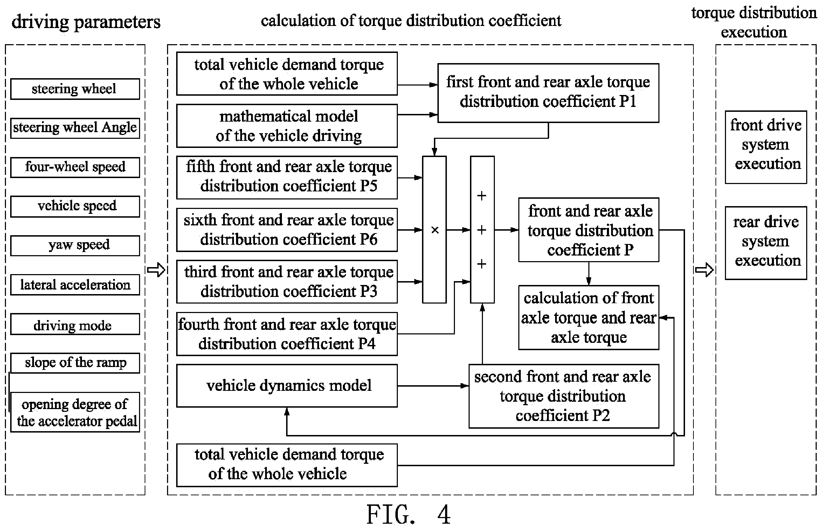

Specifically, please refer to FIG. 4, which is a logical structural block diagram of an embodiment of a torque distribution method for four-wheel drive of an electric vehicle of the present application. As shown in FIG. 4 , in order to meet the requirements of the best utilization of the road adhesion performance of the vehicle, the highest driving efficiency, steering instability control, and rapid and precise control of vehicle handling and stability, in this embodiment, the vehicle driving parameters are used as input signals, including the steering wheel, steering wheel Angle, four-wheel speed, vehicle speed, yaw speed, lateral acceleration, longitudinal acceleration, driving mode, slope of the ramp and opening degree of the accelerator pedal, through the above input signals, the total vehicle demand torque of the whole vehicle is obtained, and the first front and rear axle torque distribution coefficient P1 obtained according to the mathematical model of the front and rear axle driving force when front and rear wheels slip simultaneously, and according to the total demanded torque of the whole vehicle, the second front and rear axle torque distribution coefficient P2 based on the PID control of yaw deviation, and the third front and rear axle torque distribution coefficient P3 based on the slope of the ramp, the fourth front and rear axle torque distribution coefficient P4 based on axle slip control, the fifth front and rear axle torque distribution coefficient P5 based on steering wheel angle, the sixth front and rear axle torque distribution coefficient P6 based on vehicle speed, and then by formula P =P1*P3*P5*P6+P2+P4, where P is front and rear axle torque distribution coefficient, and then the front and rear axle torque distribution coefficient P is multiplied by the total vehicle demand torque to obtain the target front axle torque and the target rear axle torque, and then sent them to the vehicle's front and rear drive system to request execution.

It should be noted that the words before P1-P6 in FIG. 4 are their corresponding essential contents, such as the torque distribution coefficient P3 based on the slope of the ramp, that is, the third front and rear axle torque distribution coefficient P3.

Step S3: obtaining target torque of front and rear driving system according to the front and rear axle torque distribution coefficient and the total demanded torque of the whole vehicle.

In one embodiment, step S3: after the step of obtaining target torque of front and rear driving system according to the front and rear axle torque distribution coefficient and the total demanded torque of the whole vehicle, it further includes:

> obtaining the maximum torque parameters of the front and rear drive system;
> comparing the target torque with the maximum torque parameters of the front and rear drive system, and take the smaller value as the final target torque of the front and rear drive system;
> sending the final target torque to the front and rear drive system.

Specifically, in practical applications, after the front and rear motor parameters (power/peak torque) of the front and rear drive system of the vehicle are determined, the actual front and rear axle torque distribution cannot be completely consistent with the ideal driving force distribution curve. The ideal distribution is carried out within the range of the road adhesion coefficient, which is reflected in the accelerator pedal or the total demand torque of the whole vehicle, that is, only reasonable distribution can be carried out within a certain range of required torque. Therefore, in the present embodiment, the final target torque of the front and rear drive system is obtained by revising the front and rear axle torque distribution coefficient P in consideration of the actual motor conditions.

It is worth mentioning that, by adding height sensors, the weight of the front and rear axles can be evaluated in real time, and a dynamic driving model can be established in order to achieve optimal road adhesion utilization.

In the torque distribution method for four-wheel drive of an electric vehicle of the present application, by establishing a mathematical model of the driving torque of the front and rear axles when the front and rear wheels of the vehicle slip at the same time, according to the mathematical model, the ideal front and rear axle driving force distribution curves of the road surface with different road adhesion coefficients can be obtained. The ideal front and rear axle driving force distribution curve calibrates the front and rear axle torque distribution coefficient under different demand torques, so that the target torque for the most efficient front and rear drive system the best road adhesion performance can be obtained according to the total vehicle demand torque and the corresponding front and rear axle torque distribution coefficient when the vehicle is running.

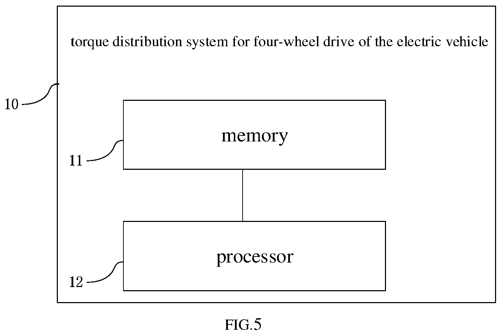

The present application also provides four-wheel drive of an electric vehicle torque distribution system. Please refer to FIG. 5, which is a schematic structural diagram of an embodiment of torque distribution system for four-wheel drive of the electric vehicle of the present application. As shown in FIG. 5, the torque distribution system for four-wheel drive of the electric vehicle 10 includes a memory 11 and a processor 12. The memory 11 stores at least one program instruction, and the processor 12 loads and executes at least one program instruction to implement any of the above-mentioned embodiments of the torque distribution method for four-wheel drive of electric vehicle.

The present application also provides a vehicle, which includes the torque distribution system for four-wheel drive of an electric vehicle 10 described in the above embodiments. Of course, the vehicle may also include various network interfaces, power supplies and other components.

For the applied torque distribution system for four-wheel drive of the electric vehicle and the vehicle, the mathematical model of driving torque of front and rear axles when front and rear wheels of vehicle skid simultaneously can be established. According to the mathematical model, the ideal driving force distribution curve of front and rear axles on the road surface with different adhesion coefficients can be obtained. According to the ideal driving force distribution curve of front and rear axles, the torque distribution coefficient of front and rear axles under different demands can be calibrated. Thus, the target torque of the front and rear drive system with the best road adhesion performance and the highest driving efficiency can be obtained according to the total torque demand of the vehicle and the corresponding torque distribution coefficient of the front and rear axles when the vehicle is running.

It should be noted that each embodiment in this specification is described in a progressive way, and each embodiment focuses on the differences with other embodiments. Please refer to each other for the same and similar parts among embodiments.

The above-mentioned embodiments merely illustrate the principles and effects of the present application, but are not intended to limit the present application. Anyone skilled in the art can make modifications or changes to the above embodiments without departing from the spirit and scope of the present application. Therefore, all equivalent modifications or changes made by those with ordinary knowledge in the technical field without departing from the spirit and technical idea disclosed in this application should still be covered by the claims of this application.

**Industrial Applicability**

In the torque distribution method for four-wheel of the electric vehicle of the present application, as well as the system and vehicle applying the method for the torque distribution method for four-wheel of the electric vehicle, by establishing a mathematical model of the driving torque of the front and rear axles when the front and rear wheels of the vehicle slip at the same time, according to the mathematical model, the ideal front and rear axle driving force distribution curve of the road surface with different road adhesion coefficents can be obtained. According to the ideal front and rear axle driving force distribution curve, the front and rear axle torque distribution coefficient under different demand torques are calibrated, so that the target torque of the front and rear drive system with the best road adhesion performance and the highest driving efficiency can be obtained according to the total torque demand of the vehicle and the corresponding torque distribution coefficient of the front and rear axles when the vehicle is running.

**Claims**

1. A torque distribution method for four-wheel drive of an electric vehicle, comprising:

   acquiring a total vehicle demand torque of a whole vehicle;
   determining a demand state of the whole vehicle according to traveling parameter information, and outputting a front and rear axle torque distribution coefficient corresponding to the demand state of the whole vehicle;
   wherein, the demand state comprises the highest driving efficiency, and outputting the front and rear axle torque distribution coefficient corresponding to the demand state of the whole vehicle comprises: obtaining a first front and rear axle torque distribution coefficient according to a mathematical model of front and rear axle driving force when front and rear wheels slip simultaneously, and according to the total demanded torque of the whole vehicle; obtaining the front and rear axle torque distribution coefficient according to the first front and rear axle torque distribution coefficient;
   obtaining target torque of front and rear driving system according to the front and rear axle torque distribution coefficient and the total demanded torque of the whole vehicle.

2. The torque distribution method for four-wheel drive of an electric vehicle according to claim **1,** wherein the step of acquiring the total vehicle demand torque of the whole vehicle comprises:

   acquiring vehicle speed and opening degree of the accelerator pedal;
   calculating the total vehicle demand torque of the whole vehicle according to the vehicle speed and the table of opening degree of the accelerator pedal.

3. The torque distribution method for four-wheel drive of an electric vehicle according to claim **1,** wherein the step of acquiring the total vehicle demand torque of the whole vehicle comprises:

   acquiring driving mode, vehicle speed and opening degree of the accelerator pedal;
   calculating the total vehicle demand torque of the whole vehicle according to the driving mode, the vehicle speed and a table of opening degree of the accelerator pedal.

4. The torque distribution method for four-wheel drive of an electric vehicle according to any one of claims **1-3,** wherein the method for obtaining the mathematical model of front and rear axle driving force when front and rear wheels slip simultaneously comprises the steps:

   acquiring a first formula group by taking the torque of the ground point of the front and rear axle tires;
   acquiring a second formula group according to the sum of the driving forces of the front and rear axles is equal to the total pavement adhesion, and the driving forces of the front and rear axles are equal to their respective pavement adhesion;

acquiring a third formula group according to the first formula group and the second formula group, wherein, the third formula group representing the front and rear axis driving force;

obtaining the mathematical model of front and rear axle driving force when front and rear wheels slip simultaneously by eliminating the road adhesion coefficient of the third formula group.

5. The torque distribution method for four-wheel drive of an electric vehicle according to claim **4**, wherein:

The first formula group is:

$$F_{Z1}L=(G*b-m*du/dt*Hg)$$

$$F_{Z2}L=(G*a+m*du/dt*Hg)$$

The second formula group is:

$$Ff+Fr=\varphi*G$$

$$F_f=\varphi*F_{Z1}$$

$$Fr=\varphi*F_{Z2}$$

The third formula group is:

$$Ff=\varphi(Wf*g-\varphi*m*g*Hg/L)$$

$$Fr=\varphi(Wr*g+\varphi*m*g*Hg/L)$$

the mathematical model of front and rear axle driving force when front and rear wheels slip simultaneously is:

$$F_r = \frac{1}{2}\left[\frac{G*b}{Hg}\sqrt{b^2 - \frac{4*Hg*L}{G}F_f} + \frac{G*b}{Hg} - 2F_f\right]$$

Among them, m=Wf+Wr, L=a+b, G=m*g, du/dt=φ*g, m is the full load mass, Wf is the mass of the front axle, Wr is the mass of the front axle, $F_{Z1}$ is the ground normal force of the front wheel, and $F_{Z2}$ is ground normal force of the rear wheel, Hg is the height of the center of mass, L is the wheelbase, a is the distance from the center of mass to the front axle, b is the distance from the center of mass to the rear axle, r is the tire rolling radius, φ is the road adhesion coefficient, and G is the vehicle gravity, du/dt is the vehicle acceleration, Ff is the front axle driving force, Fr is the rear axle driving force, Mf is the front axle torque, and Mr is the rear axle torque.

6. The four-wheel drive torque distribution method according to claim **1**, wherein after the step of obtaining the target torque of the front and rear drive system according to the front and rear axle torque distribution coefficient and the total demand torque of the whole vehicle, further comprises:

obtaining the maximum torque parameters of the front and rear drive system;

comparing the target torque with the maximum torque parameter, and taking the smaller value as the final target torque of the front and rear drive system;

sending the final target torque to the front and rear drive system.

7. The torque distribution method for four-wheel drive of an electric vehicle according to claim **1**, wherein the demand state further comprises vehicle steering instability control, and obtaining the front and rear axle torque distribution coefficient according to the first front and rear axle torque distribution coefficient comprises:

> obtaining steering state of the vehicle through vehicle dynamics analysis, and then obtaining the second front and rear axle torque distribution coefficient according to the relationship between the steering state of the vehicle and the preset steering distribution coefficient;
> obtaining the front and rear axle torque distribution coefficient by adding the first front and rear axle torque distribution coefficient and the second front and rear axle torque distribution coefficient.

8. The torque distribution method for four-wheel drive of an electric vehicle according to claim **7,** wherein the vehicle dynamics analysis is to simplify the vehicle into a two-degree-of-freedom model, and analyze the force relationship between the lateral and transverse motion of the vehicle when turning, so as to establishing the force equation by the sum of the resultant force of the vehicle's external force perpendicular to the vehicle's driving direction and the torque around the center of mass, to obtain the driver's expected yaw speed, and then obtaining the steering state of the vehicle through the difference between the expected yaw speed and the actual yaw speed, and acting the steering state of the vehicle as the input parameter of the PID control algorithm, then obtaining the second front and rear axles torque distribution coefficient according to the relationship between the input parameter and the preset steering distribution coefficient; wherein, the force equation is:

$$MV\dot{\beta} = -(2D_1 + 2D_2)\beta - [MV + (2D_1a_1 - 2D_2a_2)/V]\dot{\omega} + 2D_1\delta$$

$$I_{ZZ}\ddot{\omega} = -[(2D_1a_1^2 + 2D_2a_2^2)/V]\dot{\omega} - (2D_1a_1 - 2D_2a_2)\beta + 2D_1a_1\delta$$

Among them, V is the speed of the vehicle, M is the mass of the vehicle, Izz is the moment of inertia around the z-axis, D1 and D2 are the cornering stiffnesses of the front and rear axle tires, respectively, a1 and a2 are the distance from the center of mass to the front and rear axles, and $\beta$ is the cornering angle, $\dot{\omega}$ is the yaw speed, $\delta$ is the tire angle, that is, the product of the steering wheel angle and the angular transmission ratio.

9. The torque distribution method for four-wheel drive of an electric vehicle according to claim **1,** wherein the demand state further comprises a gradeability, and obtaining the front and rear axle torque distribution coefficient according to the first front and rear axle torque distribution coefficient comprises:

> obtaining a third front and rear axle torque distribution coefficient by comparing slope of the ramp with the preset calibration scale of the distribution coefficient based on the slope of the ramp;
> obtaining the front and rear axle torque distribution coefficient according to the product of the third front and rear axle torque distribution coefficient and the first front and rear axle torque distribution coefficient.

10. The torque distribution method for four-wheel drive of an electric vehicle according to claim **9,** wherein obtaining the front and rear axle torque distribution coefficient according to the product of the third front and rear axle torque distribution coefficient and the first front and rear axle torque distribution coefficient comprises the following steps:

> obtaining the fourth front and rear axle torque distribution coefficient based on the axle slip state parameter and the preset distribution coefficient relationship based on the axle slip state parameter;
> obtain the front and rear axle torque distribution coefficient according to multiplying the third front and rear axle torque distribution coefficient by the first front and rear axle torque distribution coefficient, and adding the multiplied result to the fourth front and rear axle torque distribution coefficient.

11. The torque distribution method for four-wheel drive of an electric vehicle according to claim **1**, wherein the demand state further comprises demand maneuverability, and obtaining the front and rear axle torque distribution coefficient according to the first front and rear axle torque distribution coefficient comprises:

> obtaining a fifth front and rear axle torque distribution coefficient by comparing steering wheel angle with the preset calibration scale of the distribution coefficient based on the steering wheel angle;
> obtaining the front and rear axle torque distribution coefficient according to the product of the fifth front and rear axle torque distribution coefficient and the first front and rear axle torque distribution coefficient.

**12.** The torque distribution method for four-wheel drive of an electric vehicle according to claim **11,** wherein the step of obtaining the front and rear axle torque distribution coefficient according to the product of the fifth front and rear axle torque distribution coefficient and the first front and rear axle torque distribution coefficient comprises:

obtaining a sixth front and rear axle torque distribution coefficient by comparing the vehicle speed with a preset calibration scale of distribution coefficient base on the vehicle speed;
obtaining the front and rear axle torque distribution coefficient by multiplying the fifth front and rear axle torque distribution coefficient, the sixth front and rear axle torque distribution coefficient, and the first front and rear axle torque distribution coefficient.

**13.** The torque distribution method for four-wheel drive of an electric vehicle according to claim **1,** wherein the demand state further comprises vehicle steering instability control, gradeability and demand maneuverability, and the step of obtaining the front and rear axle torque distribution coefficient according to the first front and rear axle torque distribution coefficient comprises:

obtaining the steering state of the vehicle through the vehicle dynamics analysis, and then obtaining the second front and rear axle torque distribution coefficient according to the relationship between the steering state of the vehicle and the preset steering distribution coefficient, obtaining the third front and rear axle torque distribution coefficient by comparing slope of the ramp with the preset calibration scale of the distribution coefficient based on the slope of the ramp, and obtaining the fourth front and rear axle torque distribution coefficient based on the axle slip state parameter and the preset distribution coefficient relationship based on the axle slip state parameter, obtaining a fifth front and rear axle torque distribution coefficient by comparing steering wheel angle with the preset calibration scale of the distribution coefficient based on the steering wheel angle, and obtaining a sixth front and rear axle torque distribution coefficient by comparing the vehicle speed with a preset calibration scale of distribution coefficient base on the vehicle speed;
obtain the front and rear axle torque distribution coefficient according to multiplying the first front and rear axle torque distribution coefficient, the third front and rear axle torque distribution coefficient, the fifth front and rear axle torque distribution coefficient, and the sixth front and rear axle torque distribution coefficient, and adding the multiplied result to the second front and rear axle torque distribution coefficient and the fourth front and rear axle torque distribution coefficient.

**14.** A torque distribution system for four-wheel drive of an electric vehicle, wherein it comprises:

a memory, the memory stores at least one program instruction;
a processor, which loads and executes the at least one program instruction to implement the torque distribution method for four-wheel drive of an electric vehicle according to any one of claims **1-13.**

**15.** A vehicle, **characterized by** comprising the four-wheel drive torque distribution system for an electric vehicle as claimed in claim **14.**

acquiring a total vehicle demand torque of a whole vehicle

S1

determining a demand state of the whole vehicle according to traveling parameter information, and outputting a front and rear axle torque distribution coefficient corresponding to the demand state of the whole vehicle; wherein, the demand state includes the highest driving efficiency, and the outputting the front and rear axle torque distribution coefficient corresponding to the demand state of the whole vehicle includes: obtaining a first front and rear axle torque distribution coefficient according to a mathematical model of front and rear axle driving force when front and rear wheels slip simultaneously, and according to the total demanded torque of the whole vehicle; obtaining the front and rear axle torque distribution coefficient according to the first front and rear axle torque distribution coefficient

S2

obtaining target torque of front and rear driving system according to the front and rear axle torque distribution coefficient and the total demanded torque of the whole vehicle.

S3

FIG.1

forword

$$m\frac{d\mu}{dt}$$

G

hg

r

Ff

Fr

o

b

Fz1

L

Fz2

FIG.2

front axle torque (N.m)

Φ=1

Φ=0.1

rear axle torque (N.m)

FIG.3

**driving parameters**

**calculation of torque distribution coefficient**

**torque distribution execution**

steering wheel

steering wheel Angle

four-wheel speed

vehicle speed

yaw speed

lateral acceleration

driving mode

slope of the ramp

opening degree of the accelerator pedal

total vehicle demand torque of the whole vehicle

mathematical model of the vehicle driving

fifth front and rear axle torque distribution coefficient P5

sixth front and rear axle torque distribution coefficient P6

third front and rear axle torque distribution coefficient P3

fourth front and rear axle torque distribution coefficient P4

vehicle dynamics model

total vehicle demand torque of the whole vehicle

first front and rear axle torque distribution coefficient P1

×

+
+
+

front and rear axle torque distribution coefficient P

calculation of front axle torque and rear axle torque

second front and rear axle torque distribution coefficient P2

front drive system execution

rear drive system execution

FIG. 4

torque distribution system for four-wheel drive of the electric vehicle

10

| memory |

11

| processor |

12

FIG.5

**INTERNATIONAL SEARCH REPORT**

| International application No. |
| --- |
| **PCT/CN2020/129825** |

**A. CLASSIFICATION OF SUBJECT MATTER**

B60L 15/20(2006.01)i

According to International Patent Classification (IPC) or to both national classification and IPC

**B. FIELDS SEARCHED**

Minimum documentation searched (classification system followed by classification symbols)

B60L

Documentation searched other than minimum documentation to the extent that such documents are included in the fields searched

Electronic data base consulted during the international search (name of data base and, where practicable, search terms used)

CNPAT; CNKI; WPI; EPODOC: 电动车, 四驱, 全轮, 扭矩, 分配, 打滑, 滑转, 效率, 附着, torque, distribut+, allocat+, awd, four wheel, drive, slip+, ev, efficiency, adhesion

**C. DOCUMENTS CONSIDERED TO BE RELEVANT**

| Category* | Citation of document, with indication, where appropriate, of the relevant passages | Relevant to claim No. |
| --- | --- | --- |
| X | CN 107640062 A (GUANGZHOU LINGSHI AUTOMOTIVE TECHNOLOGY CO., LTD.) 30 January 2018 (2018-01-30) description, paragraphs 25-82, figures 1-3 | 1-6, 14, 15 |
| Y | CN 107640062 A (GUANGZHOU LINGSHI AUTOMOTIVE TECHNOLOGY CO., LTD.) 30 January 2018 (2018-01-30) description, paragraphs 25-82, figures 1-3 | 7-13, |
| Y | CN 107472082 A (BEIJING CH-AUTO TECHNOLOGY CO., LTD.) 15 December 2017 (2017-12-15) description, paragraphs 44-80, figures 1-3 | 7, 8, 13 |
| Y | CN 109624729 A (BEIJING CH-AUTO TECHNOLOGY CO., LTD.) 16 April 2019 (2019-04-16) description, paragraphs 22-46, figures 1-2 | 9-13 |
| Y | CN 106627580 A (BYD COMPANY LTD.) 10 May 2017 (2017-05-10) description, paragraphs 47-126, figures 1-8 | 10, 13 |
| A | CN 110014851 A (CHINA FAW GROUP CORPORATION) 16 July 2019 (2019-07-16) entire document | 1-15 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 July 2021** | **20 August 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/129825** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111746305 A (JIANGXI UNIVERSITY OF TECHNOLOGY) 09 October 2020 (2020-10-09)<br>      entire document | 1-15 |
| A | CN 108327577 A (BAIC BJEV CO., LTD.) 27 July 2018 (2018-07-27)<br>      entire document | 1-15 |
| A | CN 111002974 A (YIBIN COWIN AUTOMATION CO., LTD.) 14 April 2020 (2020-04-14)<br>      entire document | 1-15 |
| A | CN 106740820 A (GUANGZHOU AUTOMOBILE GROUP CO., LTD.) 31 May 2017 (2017-05-31)<br>      entire document | 1-15 |
| A | US 2007129871 A1 (HONDA MOTOR CO., LTD.) 07 June 2007 (2007-06-07)<br>      entire document | 1-15 |

Form PCT/ISA/210 (second sheet) (January 2015)

INTERNATIONAL SEARCH REPORT
Information on patent family members

International application No.

**PCT/CN2020/129825**

| Patent document cited in search report | | | Publication date (day/month/year) | Patent family member(s) | | | Publication date (day/month/year) |
|---|---|---|---|---|---|---|---|
| CN | 107640062 | A | 30 January 2018 | CN | 107640062 | B | 06 July 2021 |
| CN | 107472082 | A | 15 December 2017 | CN | 107472082 | B | 10 December 2019 |
| CN | 109624729 | A | 16 April 2019 | | None | | |
| CN | 106627580 | A | 10 May 2017 | CN | 106627580 | B | 26 February 2019 |
| CN | 110014851 | A | 16 July 2019 | | None | | |
| CN | 111746305 | A | 09 October 2020 | | None | | |
| CN | 108327577 | A | 27 July 2018 | CN | 108327577 | B | 28 July 2020 |
| CN | 111002974 | A | 14 April 2020 | | None | | |
| CN | 106740820 | A | 31 May 2017 | CN | 106740820 | B | 23 April 2019 |
| US | 2007129871 | A1 | 07 June 2007 | US | 8321110 | B2 | 27 November 2012 |

Form PCT/ISA/210 (patent family annex) (January 2015)